# EUROPÄISCHE PATENTSCHRIFT

(11) **EP 2 375 518 B1**
(45) Veröffentlichungstag und Bekanntmachung des Hinweises auf die Patenterteilung: **05.09.2012**
(21) Anmeldenummer: 11170535.6
(22) Anmeldetag: 07.09.2000
(51) Int. Cl.: H02G 3/04, G02B 6/44, F16L 7/00, H02G 9/06

(54) **Kabelführungsrohr**
Cable guide tubing
Tube guide pour cable

(30) Priorität: 06.10.1999 DE 19948033
(43) Veröffentlichungstag der Anmeldung: 12.10.2011
(62) Teilanmeldung aus: 00119536.1
(73) Patentinhaber: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(56) Entgegenhaltungen:
- EP-A- 0 359 128
- EP-A2- 0 870 963
- DE-C1- 4 016 726

## Beschreibung

Die Erfindung betrifft ein Kabelführungsrohr aus thermoplastischem Kunststoff zur Aufnahme von Nachrichtenkabeln, insbesondere Glasfaserkabeln, mit einem im Querschnitt runden Kabelführungskanal und einer Kanalinnenwand mit Gleitrippen, welche in Rohrlängsrichtung und parallel zueinander verlaufen. Die Gleitrippen können spiralförmig bzw. wendelförmig oder schlangenlinienförmig und im Übrigen parallel zueinander verlaufen.

Es sind derartige Kabelführungsrohre bekannt, bei denen die mit alternierender Richtung verlaufenden Gleitrippen dafür sorgen, dass störende tordierende Kräfte auf das in das Kabelführungsrohr einzuschiebende oder einzuziehende Nachrichtenkabel oder Kabelbündel nicht mehr einwirken. Die aus der Reibungswechselwirkung eines Nachrichtenkabels mit den Gleitrippen resultierenden Kräfte lassen störende Tordierungen nicht mehr aufkommen und heben sich bisweilen auch vollständig auf. Im Einzelnen können die Gleitrippen Gleitbereiche mit schraubenwendelförmig geführten Gleitrippenabschnitten bilden, die gegenläufigen Wendelsinn aufweisen. Die Gleitrippen können aber auch schlangenlinienförmig verlaufen und besitzen regelmäßig einen dreieckförmigen oder bogenförmigen Querschnitt (vgl. DE 40 16 726 C1).

Die in ein solches Kabelführungsrohr eingezogenen, eingeschobenen oder eingeblasenen Nachrichtenkabel liegen über die Kabellänge regelmäßig auf mehreren Gleitrippen auf, weil diese schlangenlinienförmig oder schraubenwendelförmig mit gegenläufigem Wendesinn verlaufen. Problematisch können jedoch die von den Wendepunkten der Gleitrippen definierten Wende- bzw. Umkehrbereiche werden. Denn es ist nicht ausgeschlossen, dass Nachrichtenkabel mit einem verhältnismäßig kleinen Kabeldurchmesser in solchen Umkehrbereichen in das Rippental zwischen zwei benachbarten Gleitrippen fallen. Dadurch wird das Einschieben bzw. Einziehen oder Einblasen des betreffenden Nachrichtenkabels infolge erhöhter Reibungskräfte und reduzierter Gleitwirkung erheblich erschwert. Das gilt auch für den Fall, dass bei einem bereits mit Nachrichtenkabeln belegten Kabelführungsrohr diese Nachrichtenkabel zu einem späteren Zeitpunkt um eine weitere Strecke eingeschoben bzw. eingezogen oder eingeblasen werden müssen. Ähnlich Probleme können auch bei Nachrichtenkabeln mit größeren Kabeldurchmessern auftreten. Das hängt grundsätzlich von der Ausbildung und Anordnung der Gleitrippen ab. - Hier will die Erfindung Abhilfe schaffen.

Der Erfindung liegt die Aufgabe zugrunde, ein Kabelführungsrohr der eingangs beschriebenen Ausführungsform zu schaffen, bei dem sichergestellt ist, dass die einzuschiebenden, einzuziehenden oder einzublasenden Nachrichtenkabel auch in den Bereichen der Wendepunkte der Gleitrippen stets auf Gleitrippen aufliegen und folglich der Reibungswiderstand beim Einbringen der Nachrichtenkabel oder bei Wiederaufnahme der Kabeleinbringung beachtlich reduziert bleibt, und zwar unabhängig von dem Kabeldurchmesser der Nachrichtenkabel.

Diese Aufgabe löst die Erfindung bei einem Kabelführungsrohr der eingangs beschriebenen Ausführungsform dadurch, dass die Gleitrippen in Anpassung an unterschiedliche Kabeldurchmesser der Nachrichtenkabel unterschiedliche Gleitrippenhöhen und unterschiedliche Gleitrippenabstände zwischen den Kabelauflagepunkte aufweisen, und dass die Gleitrippenabstände zwischen den Kabelauflagepunkten so gewählt sind, dass die Nachrichtenkabel - in Abhängigkeit von ihrem jeweiligen Kabeldurchmesser - auf den für den jeweiligen Kabeldurchmesser bestimmten Gleitrippen aufliegen. Im Rahmen dieses Erfindungsgedankens werden folglich Nachrichtenkabel in Abhängigkeit von deren Kabeldurchmessern eigene Gleitrippen zugeordnet. Dabei sind Überschneidungen nicht ausgeschlossen, so dass Nachrichtenkabel unterschiedlicher Kabeldurchmesser dann auf identisch den gleichen Gleitrippen aufliegen, wenn es sich nur um einen geringfügigen bzw. relativ kleinen Kabeldurchmesserunterschied handelt.

So oder so bleibt eine beachtliche Reduzierung der Reibungskräfte im Zuge des Einschiebens oder Einziehens der betreffenden Nachrichtenkabel ebenso wie die bei der Wiederaufnahme der Kabeleinbringung bei einem bereits belegten Kabelführungsrohr unverändert aufrechterhalten. Stets ist einwandfreie Gleitwirkung auch für Nachrichtenkabel mit kleinen und kleinsten Kabeldurchmessern gewährleistet. Störende Tordierungen werden unverändert verhindert.

Weitere erfindungswesentliche Maßnahmen sind im Folgenden aufgeführt. So können die Gleitrippen eine unterschiedliche Gleitrippenbreite im Bereich der Gleitrippenbasis aufweisen. Gleitrippen mit größeren Gleitrippenhöhen weisen zweckmäßigerweise auch eine größere Gleitrippenbreite im Bereich der Gleitrippenbasis auf, so dass im Ergebnis Gleitrippen mit unterschiedlicher Gleitrippenbreite und Gleitrippenhöhe verwirklicht sind. Stets ist folglich auch bei Nachrichtenkabeln mit größeren und unterschiedlichen Kabeldurchmessern gewährleistet, dass der Reibungswiderstand, den ein solches Nachrichtenkabel beim Einbringen oder bei Wiederaufnahme des Einbringens in das Kabelführungsrohr erfährt, in den Wendepunkten und folglich Umkehrbereichen erheblich reduziert bleibt.

Endlich sieht die Erfindung vor, dass die Gleitrippen mit unterschiedlicher Gleitrippenhöhe, unterschiedlicher Gleitrippenbreite im Bereich der Gleitrippenbasis und unterschiedlichen Gleitrippenabständen zwischen den Kabelauflagepunkten einen Führungsquerschnitt des Kabelführungskanals bilden, der in symmetrischer Anordnung über den Innenumfang des Kabelführungskanals verteilt ist, sich folglich regelmäßig wiederholt, so dass eine Ausrichtung des Kabelführungsrohres vor dem Einschieben oder Einziehen der Nachrichtenkabel nicht erforderlich ist, vielmehr in jeder beliebigen Lage des Kabelführungsrohres der oben definierte Führungsquerschnitt des Kabelführungskanals zur Verfügung steht. Im Ergebnis wird nach Lehre der Erfindung ein Mehrrippensystem auch für die Wendepunktbereiche und folglich Umkehrbereiche verwirklicht, welches über den Innenumfang des Kabelkanals zur Verfügung steht.

Im Folgenden wird die Erfindung anhand einer lediglich ein Ausführungsbeispiel darstellenden Zeichnung näher erläutert. Es zeigen:
- Fig. 1: ausschnittsweise ein erfindungsgemäßes Kabelführungsrohr in perspektivischer Darstellung,
- Fig. 2: den Gegenstand nach Fig. 1 im Vertikalschnitt mit angedeutetem Nachrichtenkabel unterschiedlicher Kabeldurchmesser,
- Fig. 3: eine Abwicklung des Gegenstandes nach Fi. 2, ausschnittsweise,
- Fig. 4: einen Querschnitt durch den Gegenstand nach Fig. 3 im Bereich zwischen den Wendepunkten der schlangenlinienförmig verlaufenden Gleitrippen,
- Fig. 5: einen teilweisen Querschnitt durch den Gegenstand nach Fig. 3 in einem Wendepunktbereich, und zwar mit Kabelauflagepunkten im ungünstigsten Fall bei kleinstem Kabeldurchmesser,
- Fig. 6: den Gegenstand nach Fig. 5 mit einem größeren Kabeldurchmesser,
- Fig. 7: den Gegenstand nach Fig. 6 mit einem noch größeren Kabeldurchmesser, und
- Fig. 8: den Gegenstand nach Fig. 7 mit einem noch größeren Kabeldurchmesser.

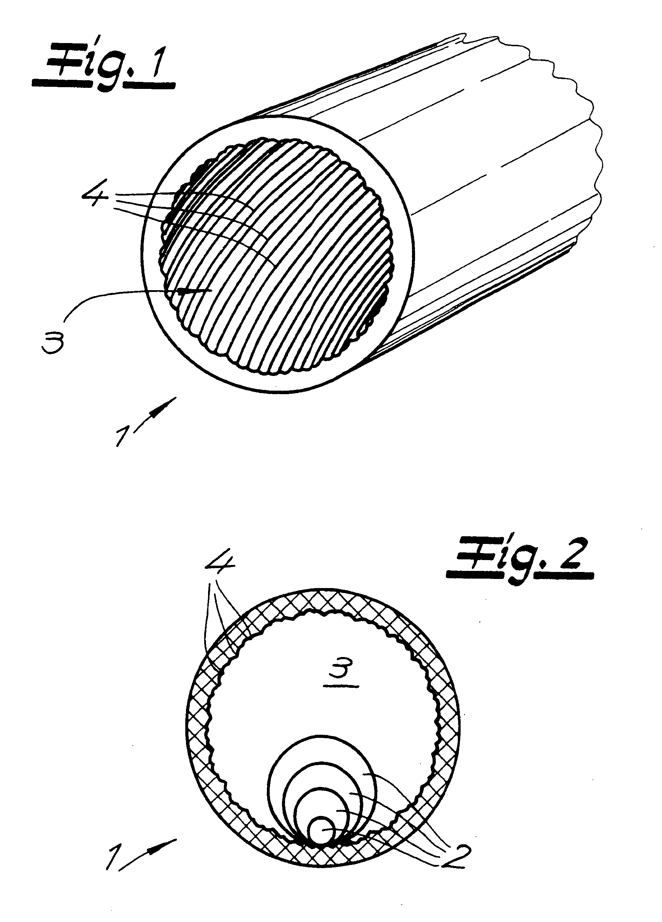

In den Figuren ist ein Kabelführungsrohr 1 aus thermoplastischem Kunststoff zur Aufnahme von Nachrichtenkabeln 2, insbesondere Glasfaserkabeln bzw. Lichtwellenleiter, dargestellt. Diese Kabelführungsrohr 1 weist einen im Querschnitt runden Kabelführungskanal 3 und eine Kanalinnenwand mit zueinander parallel verlaufenden Gleitrippen 4 auf, welche bezogen auf die Kanallängsachse und in Richtung der Kanallängsachse L unter Bildung von Wendepunkten 5 alternierende Richtungen aufweisen. Die Wendepunkte 5 der Gleitrippen 4 definieren Umkehrbereiche 6 zwischen den Gleitrippen 4. Nach dem Ausführungsbeispiel verlaufen die Gleitrippen 4 schlangenlinienförmig in Richtung der Kabellängsachse L und besitzen einen dreieckförmigen Querschnitt. Insoweit wird auf die Fig. 1 bis 3 verwiesen.

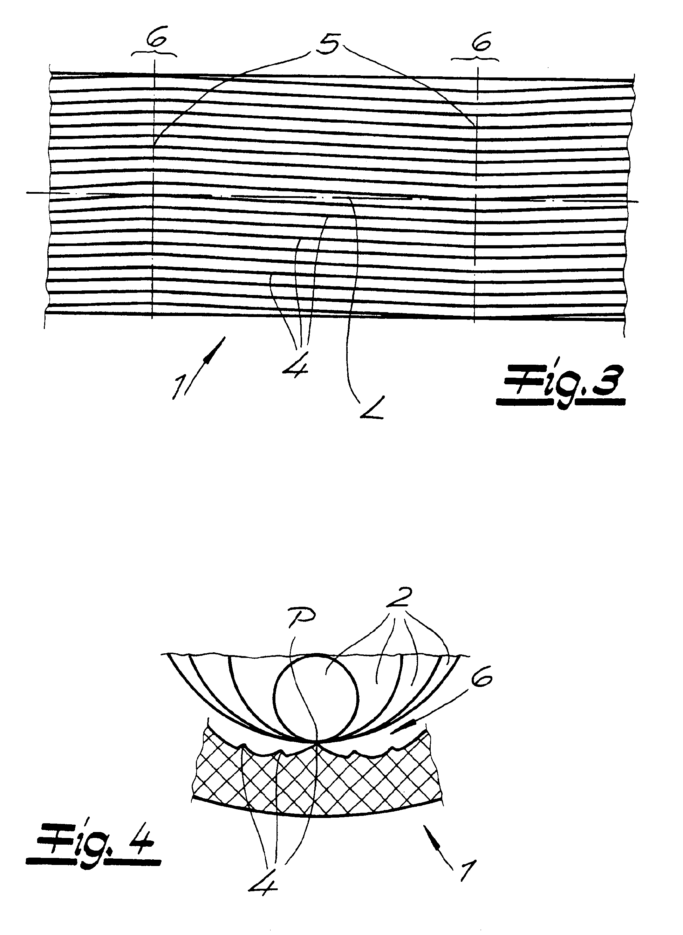

Nach Fig. 4 liegen die eingezogenen Nachrichtenkabel 2 zwischen den Wendepunktbereichen bzw. Umkehrbereichen 6 über die Länge des Kabelführungskanals 3 zwar auf verschiedenen Gleitrippen 4 auf, in dem dargestellten Querschnittsbereich des Kabelführungskanals 3 jedoch nur auf einer einzigen Gleitrippe 4, und zwar unabhängig vom jeweiligen Kabeldurchmesser.

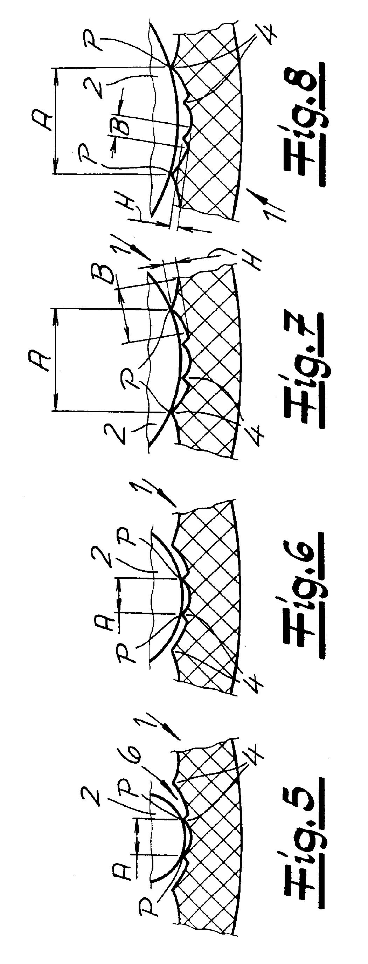

Bei der Ausführungsform nach Fig. 5 ist dafür Sorge getragen, dass die Gleitrippenabstände A zwischen den Kabelauflagepunkten P im Bereich der Wendepunkte 5 so gewählt sind, dass das jeweilige Nachrichtenkabel 2 mit dem kleinsten Kabeldurchmesser im Bereich der Wendepunkte 5 und folglich in den Umkehrbereichen 6 auf zumindest zwei benachbarten Gleitrippen 4 aufliegt und folglich nicht in das Rippental zwischen zwei Gleitrippen 4 fallen kann. Nach den Fig. 5 bis 8 weisen die Gleitrippen 4 in Anpassung an unterschiedliche Kabeldurchmesser der Nachrichtenkabel 2 unterschiedliche Gleitrippenhöhen H und unterschiedliche Gleitrippenabstände A zwischen den Kabelauflagepunkten P auf, wobei die Gleitrippenabstände A zwischen den Kabelauflagepunkten P im Bereich der Wendepunkte 5 der Gleitrippen 4 so gewählt sind, dass die Nachrichtenkabel 2 im Bereich der Wendepunkte 5 und folglich in den Umkehrbereichen 6 auf zumindest zwei Gleitrippen 4 aufliegen, und zwar unabhängig von der Größe des jeweiligen Kabeldurchmessers. Die Gleitrippen 4 weisen eine unterschiedliche Gleitrippenbreite B im Bereich der Gleitrippenbasis auf, nämlich eine größere Gleitrippenbreite B bei größerer Gleitrippenhöhe H.

Die Gleitrippen 4 mit unterschiedlicher Gleitrippenhöhe H und unterschiedlicher Gleitrippenbreite B im Bereich der Gleitrippenbasis und unterschiedlichen Gleitrippenabständen A zwischen den Kabelauflagepunkten P bilden einen Führungsquerschnitt des Kabelführungskanals 3, der in symmetrischer Anordnung über den Innenumfang des Kabelführungskanals 3 verteilt ist. Das macht Fig. 2 deutlich.

Die Fig. 5 bis 8 zeigen die Gleitrippengeometrie mit den Kabelauflagepunkten P im Bereich der Wendepunkte 5 bzw. in den Umkehrbereichen 6, und zwar jeweils im ungünstigsten Fall.

## Patentansprüche

1. Kabelführungsrohr (1) aus thermoplastischem Kunststoff zur Aufnahme von Nachrichtenkabein (2), insbesondere Glasfaserkabeln, mit einem im Querschnitt runden Kabelführungskanal (3) und einer Kanalinnenwand mit Gleitrippen (4), welche in Rohrlängsrichtung und parallel zueinander verlaufen,
**dadurch gekennzeichnet, dass**
- die Gleitrippen (4) in Anpassung an unterschiedliche Kabeldurchmesser der Nachrichtenkabel (2) unterschiedliche Gleitrippenhöhen (H) und unterschiedliche Gleitrippenabstände (A) zwischen den Kabelauflagepunkten (P) aufweisen, und dass
- die Gleitrippenabstände (A) zwischen den Kabelauflagepunkten (P) so gewählt sind, dass Nachrichtenkabel (2) auf den für den jeweiligen Kabeldurchmesser bestimmten Gleitrippen (4) aufliegen.

2. Kabelführungsrohr (1) nach Anspruch 1, **dadurch gekennzeichnet, dass** die Gleitrippen (4) eine unterschiedliche Gleitrippenbreite (B) im Bereich der Gleitrippenbasis aufweisen.

3. Kabelführungsrohr (1) nach Anspruch 1 oder 2, **dadurch gekennzeichnet, dass** die Gleitrippen (4) mit unterschiedlicher Gleitrippenhöhe (H), unterschiedlicher Gleitrippenbreite (B) im Bereich der Gleitrippenbasis und unterschiedlichen Gleitrippenabständen (A) zwischen den Kabelauflagepunkten (P) einen Führungsquerschnitt des Kabelführungskanals (3) bilden, der in symmetrischer Anordnung über den Innenumfang des Kabelführungskanals (3) verteilt ist.

## Claims

1. A cable conduit (1) of thermoplastic material for routing telecommunications cables (2), in particular fibre optic cables, having a cable conduit channel (3) which is round in cross-section and a channel inside wall with sliding ribs (4) which extend in pipe-longitudinal direction and in parallel to each other,
**characterised in that**
- the sliding ribs (4) in order to accommodate different cable diameters of the telecommunications cables, comprise differing sliding-rib heights (H) and differing sliding-rib spacings (A) between the cable support points (P), and **in that**
- the sliding-rib spacings (A) between the cable support points (P) are chosen such that telecommunications cables (2) are supported against the sliding ribs (4) suitable for the respective cable diameter.

2. The cable conduit (1) according to claim 1, **characterised in that** the sliding ribs (4) comprise a differing sliding rib width (B) in the area of the sliding rib base.

3. The cable conduit (1) according to claim 1 or 2, **characterised in that** the sliding ribs (4) having differing sliding rib heights (H), differing sliding rib widths (B) in the area of the sliding rib base and differing sliding rib spacings (A) between the cable support points (P) form a guiding cross-section of the cable conduit channel (3), which is distributed in a symmetrical arrangement across the inner circumference of the cable conduit channel (3).

## Revendications

1. Tube guide pour câbles, constitué d'une matière thermoplastique, pour l'admission de câbles de communication (2), en particulier de câbles en fibre de verre, avec un canal de guidage (3) à section transversale ronde et une paroi intérieure de canal pourvue de nervures de glissement (4), qui s'étendent dans le sens longitudinal du tube et parallèlement les unes aux autres,
**caractérisé en ce que**
- les nervures de glissement (4) présentent des hauteurs de nervures de glissement (H) différentes, en fonction des différents diamètres de câble des câbles de communication (2), ainsi que des intervalles de nervures de glissement (A) différents entre les points d'appui des câbles (P), et **en ce que**
- les intervalles de nervures de glissement (A) entre les points d'appui des câbles (P) sont choisis de telle sorte que les câbles de communication (2) reposent sur les nervures de glissement (4) adaptées aux différents diamètres de câble.

2. Tube de guidage de câbles (1) selon la revendication 1, **caractérisé en ce que** les nervures de glissement (4) présentent différentes largeurs de nervure de glissement (B), dans la région de base de la nervure de glissement.

3. Tube de guidage de câbles (1) selon la revendication 1 ou 2, **caractérisé en ce que** les nervures de glissement (4), avec des hauteurs (H) de nervure de glissement différentes, des largeurs (B) de nervure de glissement différentes dans la région de base de la nervure de glissement, et des intervalles (A) de nervures de glissement différents entre les points d'appui de câble (P), forment une section de guidage du canal de guidage de câbles (3) qui s'étend symétriquement sur le pourtour intérieur du canal de guidage de câbles (3).
